Europäisches Patentamt

European Patent Office

Office européen des brevets

(19)

(11) **EP 0 631 065 B1**

(12)

# FASCICULE DE BREVET EUROPEEN

(45) Date de publication et mention
de la délivrance du brevet:
**16.07.1997 Bulletin 1997/29**

(51) Int Cl.6: **F16F 1/12**

(21) Numéro de dépôt: **93810448.6**

(22) Date de dépôt: **23.06.1993**

(54) **Dispositif de fixation amovible pour ressort à boudin**

Abnehmbare Einbauvorrichtung für Schraubenfeder

Removable mounting device for coil spring

(84) Etats contractants désignés:
**CH DE FR LI**

(43) Date de publication de la demande:
**28.12.1994 Bulletin 1994/52**

(73) Titulaire: **FAVRE- STEUDLER SA**
**CH-2500 Bienne (CH)**

(72) Inventeur: **Favre, Philippe**
**CH-2504 Bienne (CH)**

(74) Mandataire: **Fischer, Franz Josef et al**
**BOVARD SA**
**Ingénieurs-Conseils ASCPI**
**Optingenstrasse 16**
**3000 Bern 25 (CH)**

(56) Documents cités:
**DE-U- 1 953 027      US-A- 1 847 378**
**US-A- 2 001 835      US-A- 2 028 122**

# Description

La présente invention concerne un dispositif de fixation amovible permettant de fixer un ressort sans embout, notamment un ressort à boudin, à un autre élément. La présente invention comprend également le ressort comportant un tel dispositif.

Plusieurs moyens connus permettent de relier ou d'accrocher un ressort à un autre élément. La norme DIN 2097 montre un petit tube avec crochet vissant dans le boudin. Le diamètre extérieur du tube est cannelé de façon à présenter le même type de profil qu'un boudin de diamètre identique. Un trou taraudé à l'extrémité libre permet de fixer tout type de crochet. Ce type de fixation amovible offre une grande polyvalence puisque pratiquement tout type de crochet peut y être vissé. Par contre, l'usinage du diamètre extérieur du tube nécessite des opérations particulières. Un perçage et un taraudage sont également nécessaires. Ce type de fixation amovible occasionne donc de nombreuses étapes de fabrication et fait intervenir plus d'un élément, ce qui occasionne un prix de revient relativement élevé. De plus, le point de jonction entre la portion vissée et la portion libre du ressort subit d'importantes contraintes mécaniques.

Le document GB 2 144 199 (Perfection Spring and Stamping Corporation) décrit une vis d'ajustement de la tension d'un ressort à boudin. Un disque inséré dans le ressort est percé en son centre de façon à loger une vis d'ajustement qui pénètre plus ou moins dans l'axe central du ressort, selon la force de tension requise. On aurait pu imaginer ajouter un ressort (amovible ou non) à l'extrémité libre de cette vis. Une telle réalisation offrirait cependant des caractéristiques mécaniques peu satisfaisantes puisque toute la force de maintien serait concentrée au niveau d'une seule spire. De plus, on conserverait toujours deux éléments constituants, comme dans le cas précédent.

Le document EP 0 288 061 illustre des lamelles planes comportant un (ou plusieurs) épaulement pouvant être insérés partiellement dans un ressort et agissant en tant qu'élément de maintien dudit ressort. Là encore, l'effort mécanique est concentré au niveau de l'épaulement, limitant les performances mécaniques de l'ensemble.

Le brevet US-A-2 028 122 correspond à l'art antérieur le plus proche. Il décrit un dispositif de fixation pour un ressort à boudin assez semblable à celui de l'invention, mais dont le diamètre du fil constituant le dispositif est égal à celui du fil constituant le ressort. Ce dispositif ne peut supporter qu'une force de traction inférieure à celle du dispositif selon l'invention, pour les raisons qui seront expliquées plus bas.

C'est donc dans le but de proposer un dispositif de fixation amovible simple à fabriquer, peu coûteux et offrant un maintien sans zone de concentration de contraintes, que la présente invention est avantageuse. Ce but est atteint grâce aux caractéristiques des revendications 1 à 8; la présente invention comprend également le ressort comportant un tel dispositif, selon les caractéristiques des revendications 9 à 11.

Le dispositif de fixation selon la présente invention se présente en un seul élément, très simple à fabriquer. Le fabriquant de ressorts dispose déjà de l'outillage et du matériel nécessaire pour mettre en forme le fil à ressort. La fabrication de pièces coniques facilitant l'amorce du vissage est facilement réalisable. Toute forme et dimension d'élément de fixation peut être produite. La tenue en traction du dispositif de fixation assemblé au boudin est plus grande que la limite élastique du boudin. La tenue en traction est optimale étant donné que la charge est répartie sur plusieurs spires du boudin. La force de traction, qui tend à faire diminuer le diamètre du boudin, produit un auto-serrage se répartissant sur les spires du dispositif de fixation selon l'invention.

L'invention est exposée ci-après de façon plus détaillée, à l'aide du dessin annexé comprenant les figures suivantes:

la figure 1 représente une coupe transversale du dispositif de fixation amovible selon la présente invention assemblé dans un boudin;
la figure 2 représente une coupe transversale du dispositif de fixation et du boudin désassemblés;
la figure 3 (3a à 3d) illustre différents exemples de formes d'éléments de fixation pouvant être réalisées avec le dispositif de fixation selon la présente invention;
la figure 4 montre un boudin muni de deux dispositifs de fixation;
les figures 5a et 5b illustrent les conditions d'assemblage avec des dispositifs de fixation dont les fils sont de différents diamètres.

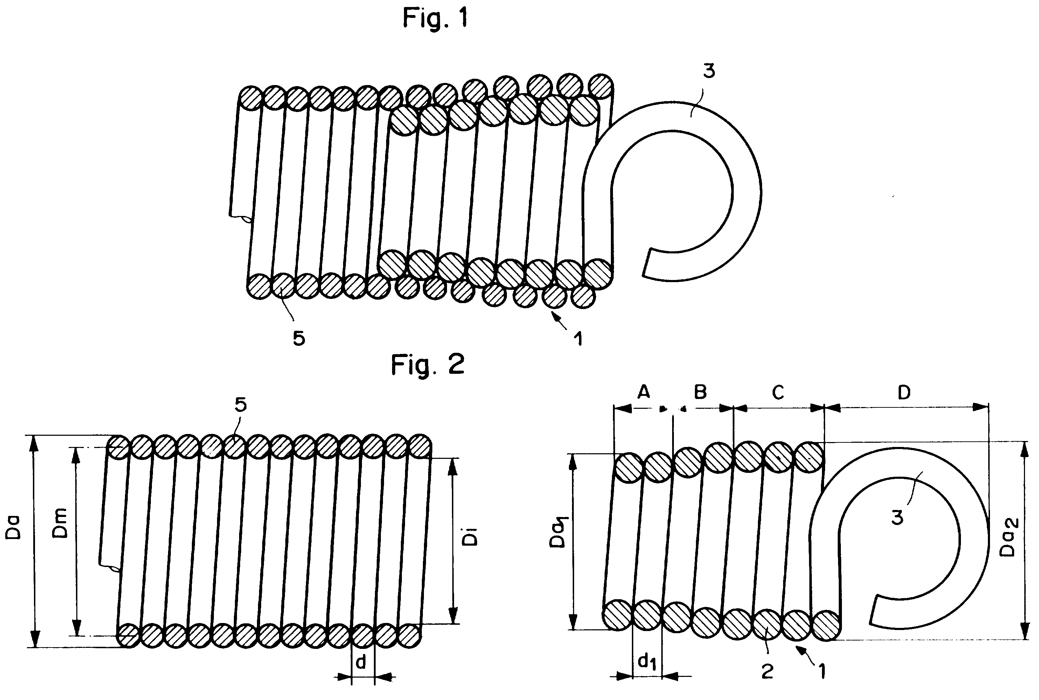

La figure 1 représente le dispositif de fixation amovible 1 selon la présente invention, inséré dans un boudin.

La figure 2 permet de mieux mettre en évidence les caractéristiques propres au dispositif de fixation amovible 1 selon l'invention. Il est constitué d'un fil de manière préférentielle rond, enroulé de façon à former un corps 2 constitué de manière préférentielle des spires jointives, formant ainsi un ressort hélicoïdal classique. L'extrémité du fil située du côté où le diamètre est le plus grand est conformé en élément de fixation 3.

La longueur de l'enroulement, le nombre de spires, les diamètres interne et externe, le type de fil ainsi que la forme de l'élément de fixation 3 peuvent varier sensiblement en fonction de l'exécution réalisée. Toutefois, de nombreux essais ont permis de démontrer que les critères suivants devraient de préférence être respectés afin d'obtenir des caractéristiques d'utilisation optimales; le corps 2 comporte de préférence trois portions: l'amorce, soit la portion A montrée à la figure 2, comporte au moins une spire de diamètre extérieur $Da1$, ledit diamètre $Da1$ étant sensiblement égal ou inférieur au diamètre interne Di du boudin 5 avec lequel ledit dispositif de fixation est utilisé. L'amorce facilite le début du vissage du dispositif de fixation 1 à l'intérieur du boudin 5. Le cône, soit la portion B montrée à la même figure, comprend au moins deux spires formant un cône s'agrandissant de manière préférentielle en se dirigeant vers l'élément de fixation 3. Il permet d'ouvrir légèrement le boudin sur son diamètre Di lorsque le dispositif de fixation est vissé. Sur la figure, l'élargissement montré est très prononcé, afin de bien montrer l'effet d'ouverture des spires. Un élargissement moindre procure également un effet similaire. Le corps de retenue, soit la portion C, comprend au moins une spire de diamètre extérieur Da2, ledit diamètre Da2 étant légèrement plus grand que le diamètre interne Di du boudin 5 avec lequel ledit dispositif de fixation est utilisé. Le corps de retenue permet d'agrandir légèrement le diamètre intérieur Di lorsque le dispositif de fixation est vissé sur toute sa longueur au boudin. La tension ainsi exercée entre les spires des deux ressorts permet un montage auto-serrant entre eux. L'élément de fixation 3, soit la portion D, peut admettre n'importe quelle forme et dimension pouvant être formée à l'aide du fil, à la fin de la partie enroulée, du côté de son plus grand diamètre Da2.

Selon différentes variantes, le dispositif selon l'invention peut comprendre seulement une ou deux des portions A, B, C.

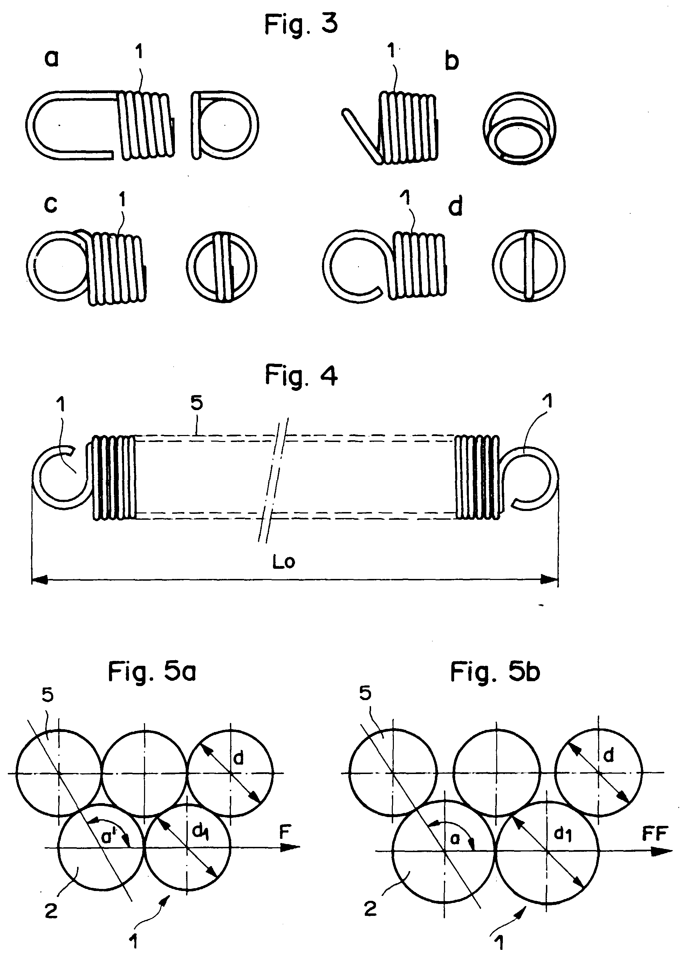

Des exemples illustrant quelles formes peut prendre le moyen de fixation 3 sont montrés à la figure 3.

Les figures 5a et 5b montrent les conditions optimales qu'il est préférable de respecter si on souhaite un meilleur maintien entre les deux ressorts: en 5a, on illustre une force de traction F que peut supporter l'assemblage dans le cas où le diamètre du fil de chaque ressort est identique; en 5b, on illustre une force de traction FF que peut supporter l'assemblage 1/5 dans le cas où le diamètre du fil du dispositif de fixation 1 est plus grand que le diamètre du fil du boudin 5 dans lequel il est fixé (d1 > d). Ainsi, l'assemblage avec d1>d supporte une force FF plus grande que l'assemblage avec d1=d. Des essais ont permis de démontrer que la force de traction supportable est particulièrement grande lorsque la différence entre d et d1 se situe autour de 20%. On constate en effet que l'angle a (figure 5b) est plus grand que l'angle a' (figure 5a), ce qui permet à l'assemblage des deux ressorts de supporter une force de traction plus importante. D'autre part, les spires du boudin 5 étant ouvertes, il en résulte un meilleur équilibre lorsque le ressort est tendu.

Le rapport d'enroulement Dm/d définit la force de précontrainte des spires jointives. Dm (figure 2) désigne le diamètre moyen du ressort sur lequel le dispositif de fixation est fixé; d désigne le diamètre du fil. Afin d'assurer un bon assemblage, il est préférable d'utiliser un ressort 5 dimensionné de sorte que le rapport d'enroulement se situe dans les limites suivantes:

$$4 < Dm/d < 12$$

Les résultats les plus satisfaisants sont atteints lorsque ce rapport se situe autour de 8.

Le matériau utilisé pour le dispositif de fixation s'apparente la plupart du temps à celui du boudin sur lequel le dispositif de fixation doit être fixé. On utilise de préférence un fil de section ronde de qualité ressort, comme par exemple l'acier à ressort Classe II DIN 17223/1, l'acier à ressort Classe C DIN 17223/1, l'acier à ressort inoxydable DIN 17224, ou tout autre matériau offrant des caractéristiques mécaniques comparables.

Avec les critères de conception énoncés ci-haut, le dispositif de fixation selon la présente invention permet aisément d'obtenir une force de retenue de l'assemblage suffisamment grande pour permettre une élongation du ressort principal au delà de celle permise pour atteindre la limite élastique du matériau.

Le dispositif de fixation selon la présente invention permet de fixer n'importe quel genre d'élément de fixation sur un boudin, sans qu'il soit nécessaire de former ledit élément directement en bout du boudin, comme cela se fait avec les ressorts de types connus. Il permet également de fabriquer, de façon extrêmement simple et peu coûteuse des ressorts de traction de toutes les longueurs Lo (figure 4), simplement en coupant le boudin ou ressort principal 5 à la longueur appropriée.

Le dispositif de fixation selon l'invention offre des avantages économiques et mécaniques dans le cas d'assemblages permanents. Il convient également pour les prototypes, puisqu'il permet de procéder facilement à des essais fonctionnels, comme par exemple des essais de charge. Par ailleurs, il est également avantageux dans le cas de modifications ou réparations, de part sa grande souplesse d'utilisation.

## Revendications

1. Dispositif de fixation amovible (1) d'un ressort à boudin (5), ledit dispositif étant constitué d'un élément de fixation (D,3) conformé dans le prolongement d'un corps (C,2), ledit corps (2) étant constitué d'un enroulement de fil à ressort à spires jointives dont le diamètre extérieur ($Da_2$) est plus grand que le diamètre intérieur ($D_i$) dudit ressort à boudin, ledit élément de fixation (3) étant conformé avec le même fil que ledit corps, ledit dispositif étant destiné à être vissé à une extrémité dudit ressort à boudin (5),
   caractérisé en ce que
   le diamètre du fil à ressort ($d_1$) constituant ledit dispositif est supérieur au diamètre du fil à ressort (d) constituant le ressort à boudin.

2. Dispositif selon la revendication 1, caractérisé en ce que le diamètre du fil à ressort ($d_1$) constituant ledit dispositif est compris entre 110 % et 130 % du diamètre du fil à ressort (d) constituant le ressort à boudin.

3. Dispositif selon la revendication 2, caractérisé en ce que le diamètre du fil à ressort ($d_1$) constituant ledit dispositif est sensiblement égal à 120 % du diamètre du fil à ressort (d) constituant le ressort à boudin.

4. Dispositif selon l'une des revendications précédentes, caractérisé en ce qu'il comprend en outre une portion d'amorce (A), disposée à son extrémité opposée à celle munie de l'élément de fixation (D), ladite portion d'amorce étant constituée d'au moins une spire dont le diamètre extérieur ($Da_1$) est inférieur au diamètre intérieur ($D_i$) du boudin (5).

5. Dispositif selon la revendication 4, caractérisé en ce qu'il comprend en outre une portion de transition (B) constituée d'au moins deux spires formées en cône, passant du diamètre ($Da_1$) de la portion d'amorce (A) au diamètre ($Da_2$) de la portion de corps (C).

6. Dispositif de fixation selon l'une des revendications précédentes, caractérisé en ce qu'il est fabriqué en acier à ressort Classe II DIN 17223/1.

7. Dispositif de fixation selon l'une des revendications 1 à 6, caractérisé en ce qu'il est fabriqué en acier à ressort Classe C DIN 17223/1.

8. Dispositif de fixation selon l'une des revendications 1 à 6, caractérisé en ce qu'il est fabriqué en acier à ressort inoxydable DIN 17224.

9. Ressort à boudin (5) comportant au moins un dispositif de fixation (1) selon l'une des revendications précédentes.

10. Ressort (5) selon la revendication 9, caractérisé en ce que son rapport d'enroulement (Dm/d) se situe entre 4 et 12.

11. Ressort selon l'une des revendications 9 ou 10, caractérisé en ce que son rapport d'enroulement (Dm/d) est sensiblement égal à 8.

**Patentansprüche**

1. Abnehmbare Befestigungsvorrichtung (1) einer Schraubenfeder (5), bestehend aus einem in der Verlängerung eines Körpers (C, 2) gebildeten Befestigungselement (D, 3), welcher Körper (2) aus aneinanderliegenden Wicklungen aus Federdraht besteht, deren äusserer Durchmesser ($Da_2$) grösser ist als der innere Durchmesser ($D_i$) der besagten Schraubenfeder, wobei das besagte Befestigungselement (3) aus dem gleichen Draht besteht wie der besagte Körper und wobei die besagte Vorrichtung dazu bestimmt ist, an ein Ende der besagten Schraubenfeder (5) geschraubt zu werden, dadurch gekennzeichnet, dass der Durchmesser ($d_1$) des Federdrahtes der besagten Vorrichtung grösser ist als der Durchmesser (d) des Federdrahtes der Schraubenfeder.

2. Befestigungsvorrichtung nach Anspruch 1, dadurch gekennzeichnet, dass der Durchmesser ($d_1$) des Federdrahtes der besagten Vorrichtung zwischen 110 % und 130 % des Durchmessers (d) des Federdrahtes der Schraubenfeder beträgt.

3. Befestigungsvorrichtung nach Anspruch 2, dadurch gekennzeichnet, dass der Durchmesser ($d_1$) des Federdrahtes der besagten Vorrichtung mindestens annähernd 120 % des Durchmessers (d) des Federdrahtes der Schraubenfeder beträgt.

4. Befestigungsvorrichtung nach einem der vorangehenden Ansprüche, dadurch gekennzeichnet, dass sie ausserdem einen Anfangsbereich (A) enthält, der an dem Ende angeordnet ist, welches dem mit dem Befestigungselement (D) versehenen Ende gegenüberliegt, welcher Anfangsbereich aus wenigstens einer Windung gebildet ist, deren Aussendurchmesser ($Da_1$) geringer ist als der Innendurchmesser ($D_i$) der Schraubenfeder (5).

5. Befestigungsvorrichtung nach Anspruch 4, dadurch gekennzeichnet, dass sie ausserdem einen aus wenigstens zwei konisch geformten Windungen gebildeten Übergangsbereich (B) enthält, der vom Durchmesser ($Da_1$) des Anfangsbereichs (A) zum Durchmesser ($Da_2$) des Körpers (C) übergeht.

6. Befestigungsvorrichtung nach einem der vorangehenden Ansprüche, dadurch gekennzeichnet, dass sie aus Federstahl der Klasse II DIN 17223/1 hergestellt ist.

7. Befestigungsvorrichtung nach einem der Ansprüche 1 bis 6, dadurch gekennzeichnet, dass sie aus Federstahl der Klasse C DIN 17223/1 hergestellt ist.

8. Befestigungsvorrichtung nach einem der Ansprüche 1 bis 6, dadurch gekennzeichnet, dass sie aus nichtrostendem Federstahl nach DIN 17224 hergestellt ist.

9. Schraubenfeder (5), enthaltend mindestens eine Befestigungsvorrichtung (1) nach einem der vorangehenden Ansprüche.

**10.** Schraubenfeder nach Anspruch 9, dadurch gekennzeichnet, dass ihr Wickelverhältnis (Dm/d) zwischen 4 und 12 ist.

**11.** Schraubenfeder nach einem der Ansprüche 9 oder 10, dadurch gekennzeichnet, dass ihr Wickelverhältnis (Dm/d) mindestens annähernd 8 ist.

**Claims**

**1.** Removable fixing device (1) for a coil spring (5), said device comprising a fixing element (D, 3) formed in the prolongation of a body (C, 2), said body (2) being composed of a wire winding of a spring wire of contiguous convolutions whose outer diameter ($Da_2$) is larger than the inner diameter ($D_i$) of said coil spring, said fixing element (3) conforming to the same wire as said body, said device being intended to be screwed to an end of said coil spring (5)

characterized in that

the diameter of the spring wire ($d_1$) constituting said device is greater than the diameter of the spring wire (d) constituting the coil spring.

**2.** Device according to claim 1, characterized in that the diameter of the spring wire ($d_1$) constituting said device is between 110% and 130% of the diameter of the spring wire (d) constituting the coil spring.

**3.** Device according to claim 2, characterized in that the diameter of the spring wire ($d_1$) constituting said device is substantially equal to 120% of the diameter of the spring wire (d) constituting the coil spring.

**4.** Device according to one of the preceding claims, characterized in that it further comprises a lead-in portion (A), disposed at its end opposite that equipped with the fixing element (D), said lead-in portion being made up of at least one turn whose outer diameter ($Da_1$) is less than the inner diameter ($D_i$) of the coil (5).

**5.** Device according to claim 4, characterized in that it further comprises a transition portion (B) made up of at least two convolutions formed as a cone passing from the diameter ($Da_1$) of the lead-in portion (A) to the diameter ($Da_2$) of the body portion (C).

**6.** Fixing device according to one of the preceding claims characterized in that it is manufactured of Class II DIN 17223/1 spring steel.

**7.** Fixing device according to one of the claims 1 to 6, characterized in that it is manufactured of Class C DIN 17223/1 spring steel.

**8.** Fixing device according to one of the claims 1 to 6, characterized in that it is manufactured of stainless spring steel DIN 17224.

**9.** Coil spring (5) comprising at lest one fixing device (1) according to one of the preceding claims.

**10.** Spring (5) according to claim 9, characterized in that its winding ratio (Dm/d) is between 4 and 12.

**11.** Spring according to one of the claims 9 or 10, characterized in that its winding ratio (Dm/d) is substantially equal to 8.

Fig. 1

Fig. 2

Fig. 3

Fig. 4

Fig. 5a

Fig. 5b